# FASCICULE DE BREVET EUROPEEN

(11) **EP 3 410 860 B1**
(45) Date de publication et mention de la délivrance du brevet: **01.05.2019**
(21) Numéro de dépôt: 17706696.6
(22) Date de dépôt: 02.02.2017
(51) Int. Cl.: A21C 11/00

(54) **DISPOSITIF DE FORMAGE D'UNE PÂTE ABAISSÉE À PARTIR D'UN PÂTON PAR PRESSAGE**
VORRICHTUNG ZUR HERSTELLUNG EINES BLÄTTERTEIGS AUS EINEM TEIGSTÜCK DURCH PRESSEN
DEVICE FOR FORMING A SHEETED DOUGH FROM A DOUGH PIECE BY PRESSING

(30) Priorité: 03.02.2016 FR 1650844
(43) Date de publication de la demande: 12.12.2018
(73) Titulaire: Ekim, 77144 Montevrain (FR)
(72) Inventeur: HAMON, Cyrill, 77144 Montevrain (FR); ROVERSO, Sébastien, 77144 Chalifert (FR); CALVARIN, Faustine, 77184 Emerainville (FR)
(74) Mandataire: IPAZ
(86) Numéro de dépôt international: PCT/EP2017/052230
(87) Numéro de publication internationale: WO 2017/134150

(56) Documents cités:
- EP-A1- 2 174 549
- US-A1- 2007 178 198

## Description

### Domaine technique

La présente invention concerne un dispositif de formage d'un pâton en vue d'obtenir une pâte abaissée. Elle concerne aussi un automate pour la confection de produits alimentaires tels que des pizzas. Document US2007/0178198 A1 montre un tel dispositif et automate.

La présente invention se situe dans le domaine de la confection de pâtes alimentaires utilisées dans l'industrie agroalimentaire, et plus particulièrement le domaine des pizzas industrielles ou semi-artisanales.

### État de la technique antérieure

Le principe général de façonnage de pâtons en vue d'obtenir une pâte abaissée pour la confection de pizzas est déjà bien connu. Les dispositifs qui mettent en oeuvre ce principe comprennent généralement une presse à l'intérieure de laquelle un pâton est déposé puis pressé afin de l'étaler. Le pâton est maintenu compressé entre les deux plateaux durant une certaine durée avant que les deux plateaux soient à nouveau écartés afin de pouvoir extraire la pâte abaissée ainsi mise en forme. De manière connue, la forme de la pâte abaissée est donnée - pendant l'opération de pressage - par la forme des plateaux entre lesquels le pâton est pressé. Ainsi, une empreinte réalisée sur le pourtour de l'un des plateaux permet de donner à la fois la forme générale de la pâte abaissée, mais aussi de réaliser un rebord périphérique à la pâte au cours d'un unique procédé de formage.

La pâte abaissée peut être extraite du dispositif de formage par l'insertion d'une pelle plate entre la pâte abaissée et le plateau inférieur sur lequel elle repose. L'utilisation d'une pelle présentant une épaisseur relativement faible au regard de l'épaisseur de la pâte abaissée est généralement requise pour permettre l'insertion de la pelle sous la pâte abaissée, et empêcher la déformation de la pâte abaissée. Malgré tout, les problèmes d'adhérence entre la pelle plate et la pâte abaissée durant l'opération d'insertion de ladite pelle plate sous la pâte abaissée demeurent entiers, entrainant des risques élevés de déchirement de la pâte et une perte de rentabilité. Malgré de nombreuses techniques mises en oeuvre pour limiter l'adhérence entre le plateau inférieur et la pâte abaissée - par exemple par l'utilisation de matériaux particuliers ou l'ajout de farine sur le plateau inférieur - le déchirement de la pâte abaissée demeure fréquent. L'automatisation de l'étape d'extraction d'une pâte abaissée après formage est ainsi difficile à réaliser.

La présente invention a pour objet de répondre au moins en grande partie aux problèmes précédents et de conduire en outre à d'autres avantages.

Un autre but de l'invention est de résoudre au moins un de ces problèmes par un nouveau dispositif de formage de pâte abaissée à partir de pâtons.

Un autre but de la présente invention est d'améliorer les rendements d'utilisation de dispositifs de formage de pâtons.

Un autre but de la présente invention est de faciliter l'opération d'extraction d'une pâte abaissée sur un dispositif de formage de pâtons.

Un autre but de la présente invention est de limiter les causes de déchirement lors de l'extraction de la pâte abaissée mise en forme.

Encore un autre but de la présente invention est de fournir un dispositif de formage d'une pâte abaissée qui soit de conception simple.

### Exposé de l'invention

Selon un premier aspect de l'invention, on atteint au moins l'un des objectifs précités avec le dispositif de formage d'une pâte abaissée à partir d'un pâton, comprenant (i) un plateau inférieur, agencé pour supporter le pâton pendant une opération de formage, (ii) un plateau supérieur, et (iii) un actionneur de formage, agencé pour générer un déplacement relatif entre le plateau supérieur et le plateau inférieur, de manière à pouvoir presser le pâton entre le plateau inférieur et le plateau supérieur pour former une pâte abaissée. Le plateau inférieur comporte :
- une plaque de pression présentant une surface supérieure apte à accueillir le pâton, la plaque de pression étant munie d'une pluralité d'ouvertures formées sur sa surface supérieure,
- une pluralité d'éléments mobiles, chaque élément mobile coopérant avec l'une des ouvertures de la plaque de pression, les éléments mobiles étant aptes à prendre :
   ∘ une position dite rentrée, dans laquelle une surface supérieure de chaque élément mobile affleure la surface supérieure de la plaque de pression, de manière à former globalement une surface continue avec la plaque de pression, et
   ∘ une position dite surélevée, dans laquelle les éléments mobiles sont en saillie par rapport à la surface supérieure de la plaque de pression, de manière à ce que les surfaces supérieures de chaque élément mobile forment ensemble une surface surélevée par rapport à la surface supérieure de la plaque de pression, et
- un dispositif de relevage, agencé pour déplacer les éléments mobiles relativement à la plaque de pression, de manière à ce que les éléments mobiles prennent la position rentrée ou la position surélevée.

De manière comparable aux dispositifs de formage connus, la présente invention met en oeuvre deux plateaux mobiles l'un par rapport à l'autre grâce à au moins un actionneur agencé pour appliquer une pression entre lesdits deux plateaux. L'au moins un actionneur peut être agencé pour déplacer uniquement l'un des deux plateaux - et préférentiellement le plateau supérieur - ou, alternativement, pour déplacer les deux plateaux, de manière concomitante ou consécutivement.

Le dispositif de formage est agencé de sorte que les plateaux supérieur et inférieur puissent collaborer lors d'une opération de pressage afin de donner à un pâton la forme d'une pâte abaissée. Plus précisément, le dispositif de formage est agencé pour que dans une position dite abaissée, la surface supérieure du plateau inférieur et la surface inférieur du plateau supérieur se trouvent dans une position relative telle que le pâton soit déformé par rapport à sa forme initiale. Les plateaux inférieur et supérieur présentent par exemple une surface plane, une surface convexe, ou une surface concave. La surface supérieure du plateau inférieur et la surface inférieure du plateau supérieur peuvent présenter des formes complémentaires. La distance entre la surface supérieure du plateau inférieur et la surface inférieure du plateau supérieur peut être constante ou non. À titre d'exemples non limitatifs, les plateaux peuvent être plans tous les deux ou alors l'un peut être concave et l'autre convexe, les rayons de courbure de chaque surface pouvant être égaux.

Le plateau supérieur peut contribuer à la mise en forme finale de la pâte abaissée. Par exemple, le plateau supérieur peut comporter une empreinte annulaire formée sur sa surface inférieure afin de permettre la formation d'un rebord périphérique sur la pâte durant l'opération de pressage. Cette empreinte annulaire peut avantageusement prendre une forme parfaitement circulaire afin de réaliser des pâtes abaissées circulaires. Elle peut alternativement prendre une forme moins régulière afin de simuler un étalement artisanal de la pâte.

De manière astucieuse, le plateau inférieur n'est plus monolithique comme c'est le cas pour les dispositifs de l'art antérieur. Au contraire, le plateau inférieur selon l'invention est composé d'une plaque de pression dont la surface supérieure, en regard du plateau supérieur, comprend une pluralité d'ouvertures, chaque ouverture étant ménagée dans la plaque de pression selon une ligne directrice sensiblement perpendiculaire au plan de la surface supérieure. Dans le cas d'une surface non plane, le plan doit être considéré comme le plan moyen au voisinage de la surface supérieure de la plaque de pression. Chaque ouverture débouche au moins sur la surface supérieure de la plaque de pression. Elle peut en outre déboucher sur la surface inférieure de la plaque de pression, opposée à la surface supérieure. À l'intérieur de chaque ouverture, un élément mobile est accueilli et est apte à se déplacer le long de ladite ligne directrice correspondante. Ainsi, collectivement, la pluralité d'éléments mobiles permet, dans une première configuration, dite configuration rentrée, de former une surface continue semblable à celle obtenue par un plateau inférieur monolithique et, dans une seconde configuration, dite configuration surélevée, de former une surface discontinue s'étendant localement au-delà de la surface supérieure de la plaque de pression.

Selon une première alternative, la distribution des ouvertures réalisées sur la plaque de pression et la distribution équivalente des éléments mobiles collaborant avec lesdites ouvertures peuvent être homogènes, afin que lesdits éléments mobiles définissent, dans la configuration surélevée, une surface discontinue supportant la pâte abaissée en une pluralité de zones de contact réparties de manière homogène sous la surface de ladite pâte abaissée. Avantageusement, les ouvertures et les éléments mobiles sont répartis de manière homogène selon deux directions perpendiculaires d'un plan parallèle à une surface moyenne du plateau inférieur. Il est ainsi possible de supporter la pâte abaissée de manière régulière et de réduire les risques de déchirement liés à l'affaissement d'une portion de pâte entre deux éléments mobiles. La densité d'ouvertures réalisées dans la plaque de pression ainsi que la densité d'éléments mobiles collaborant avec lesdites ouvertures peuvent ainsi être ajustées selon les caractéristiques mécaniques de la pâte, et notamment son élasticité et sa souplesse.

Selon une seconde alternative, la distribution des ouvertures réalisées sur la plaque de pression et la distribution des éléments mobiles collaborant avec lesdites ouvertures peuvent être non homogènes, en présentant par exemple des zones dans lesquelles les densités d'ouvertures et d'éléments mobiles sont plus grandes que dans d'autres zones. Cette distribution non homogène peut être établie par exemple en fonction du poids des portions de pâte abaissée qui sont supportées par chaque élément mobile et/ou en fonction de la résistance à l'étirement desdites portions afin de réduire les risques de déchirement. En effet, les portions de la pâte abaissées qui comprennent une surépaisseur - par exemple le pourtour périphérique - présentent une masse surfacique plus importante que les portions de la pâte abaissée qui ne comprennent qu'une fine couche de pâte étalée. De manière comparable, les portions de pâte abaissée qui sont les plus fines peuvent être plus fragiles lorsqu'elles sont soumises à l'étirement que les portions de pâte comprenant une surépaisseur.

A titre d'exemple non limitatif, dans la configuration surélevée, la surface supérieure des éléments mobiles peut être située entre deux millimètres et trois centimètres de la surface supérieure de la plaque de pression. La surface supérieure des éléments mobiles est par exemple située à deux centimètres de la surface supérieure de la plaque de pression.

Durant une opération de pressage, c'est-à-dire lorsque l'actionneur de formage rapproche les deux plateaux l'un de l'autre, les éléments mobiles sont tous positionnés dans la position rentrée afin de former une surface de contact continue avec la surface supérieure de la plaque de pression. Ensuite, lors d'une opération d'extraction de la pâte abaissée, le plateau supérieur étant positionné à distance du plateau inférieur, au moins une partie des éléments mobiles est déplacée vers la position surélevée afin de décoller la pâte abaissée de la surface supérieure de la plaque de pression. Il est alors possible d'introduire une pelle entre la pâte abaissée ainsi soulevée et la plaque de pression, sans contact - et donc sans frottements - entre ladite pelle et ladite pâte abaissée, réduisant de cette manière les risques de déchirement. La pelle est agencée de manière à s'insérer entre les éléments mobiles, selon leur implantation sur la plaque de pression. Elle prend par exemple la forme d'un peigne, chaque doigt du peigne venant se loger entre des éléments mobiles.

Le plateau inférieur selon l'invention permet de faciliter l'opération d'extraction de la pâte abaissée du dispositif de formage, et en particulier, le décollement de la pâte abaissée du plateau inférieur sans déchirement. Le décollement est en effet réalisé en deux étapes distinctes : (1) décollement de la pâte de la plaque de pression lors du soulèvement des éléments mobiles et (2) décollement de la pâte abaissée des éléments mobiles lorsque la pelle (insérée en dessous) vient saisir la pâte abaissée en la soulevant.

Eventuellement, le décollement de la pâte abaissée des éléments mobiles peut être réalisé en combinant un mouvement de rétractation desdits éléments mobiles vers le plateau inférieur avec un mouvement opposé de la pelle, insérée en dessous de la pâte abaissée, en direction du plateau supérieur.

Alternativement, le décollement de la pâte abaissée des éléments mobiles peut aussi être réalisé en rétractant complètement les éléments mobiles vers le plateau inférieur, la pelle étant insérée en dessous de la pâte abaissée.

Le premier aspect de la présente invention permet ainsi d'améliorer les rendements d'utilisation de dispositifs de formage de pâtons, en réduisant le nombre de pâtes abaissées déchirées durant leur extraction.

Selon un premier mode de réalisation, le dispositif de relevage permet de déplacer les éléments mobiles de manière simultanée et collective, tous les éléments mobiles étant animés d'un même mouvement. Dans ce mode de réalisation, tous les éléments mobiles peuvent être mis en mouvement par un unique actionneur relié à chaque élément mobile par une pluralité d'organes de transmission afin de propager le mouvement généré par l'actionneur à chaque élément mobile. Les éléments mobiles peuvent alternativement être tous fixés à un support unique, entraîné par l'actionneur.

Selon un deuxième mode de réalisation, le dispositif de relevage permet de déplacer les éléments mobiles de manière individuelle. Dans ce deuxième mode de réalisation, chaque élément mobile peut préférentiellement être mis en mouvement par un actionneur distinct, chaque actionneur pouvant être piloté indépendamment des autres actionneurs.

Éventuellement, une fois l'opération de pressage réalisée et avant l'extension complète des éléments mobiles pour décoller la pâte abaissée, le dispositif de relevage selon le second mode de réalisation peut commander chaque élément mobile selon une pluralité de mouvements de va-et-vient de faibles amplitudes afin de faciliter le décollement de la pâte abaissée de la surface supérieure de la plaque de pression. Il est ainsi possible de décoller au moins partiellement les portions de pâte abaissées situées entre deux éléments mobiles en soumettant lesdites portions de pâte abaissée à un étirement réduit en cas d'adhérence et donc de limiter les risques de déchirement. La répétition des mouvements de va-et-vient permet *in fine* de décoller complètement la pâte abaissée de la plaque de pression.

Une fois la pâte mise en forme, il est nécessaire dans un premier temps de réduire autant que possible la surface en contact avec la plaque de pression, tout en réduisant les risques de déchirement durant l'opération de décollement, et en garantissant une certaine tenue de la pâte abaissée sur les éléments mobiles. Dans un second temps, il est aussi nécessaire d'assurer un décollement aisé de la pâte abaissée soutenue par les éléments mobiles dans la configuration surélevée.

Le décollement de la pâte abaissée de la plaque de pression d'une part, et des éléments mobiles d'autre part, implique la recherche d'un compromis sur le dimensionnement et la répartition des éléments mobiles. Plus précisément, un compromis doit être trouvé au sujet de la surface couverte par l'ensemble des éléments mobiles et/ou leur implantation relativement à la surface supérieure du plateau inférieur.

Ainsi dans le dispositif de formage conforme au premier aspect de l'invention, la somme des surfaces supérieures des éléments mobiles est au moins supérieure ou égale à 4% de la surface globale de la plaque de pression. Dans la suite du document, la somme des surfaces supérieures des éléments mobiles est appelée surface fractionnée. Par surface globale, on entend la surface de la plaque de pression incluant la surface des ouvertures ménagées dans la plaque de pression. Une telle proportion permet de limiter l'effondrement de la pâte abaissée entre les éléments mobiles, et de limiter l'adhérence de la pâte sur les éléments mobiles lors du décollement par la pelle.

Avec simplement 4% de la surface de la pâte abaissée soutenue par tout ou partie des éléments mobiles, la pâte abaissée est soutenue par un nombre minimal de points d'appui. Cette configuration est évidemment la plus économique à fabriquer car elle met en oeuvre un nombre minimal d'éléments mobiles. En revanche, elle engendre une plus grande tension interne dans les parties de la pâte abaissée qui sont situées entre deux éléments mobiles consécutifs.

Dans le même temps, la surface fractionnée est de préférence inférieure ou égale à 96% de la surface globale de la plaque de pression. Une telle proportion permet de soutenir la pâte abaissée dans la configuration surélevée avec une surface de contact maximale, réduisant donc l'étirement de la pâte abaissée entre deux éléments mobiles et limitant ainsi les risques de déchirements, tout en permettant en outre d'insérer une pelle entre les éléments mobiles afin de prélever ladite pâte abaissée.

Une configuration optimale implique une surface fractionnée comprise entre 15% et 30% de la surface globale de la plaque de pression. La surface fractionnée est par exemple égale à 20% de la surface globale de la plaque de pression.

Selon un premier mode de réalisation du dispositif de formage conforme à l'un quelconque des perfectionnements du premier aspect de l'invention, les surfaces supérieures des éléments mobiles forment ensemble une surface connexe. En d'autres termes, la surface supérieure des éléments mobiles forme une surface continue.

Alternativement, selon un second mode de réalisation du dispositif de formage conforme à l'un quelconque des perfectionnements du premier aspect de l'invention, les surfaces supérieures des éléments mobiles forment ensemble une surface non connexe, chaque élément mobile étant régulièrement espacé du plus proche élément mobile voisin dans au moins une direction. La surface supérieure des éléments mobiles forment ainsi une surface discontinue.

Cette configuration permet astucieusement de réduire l'encrassement des éléments mobiles et/ou de la pluralité des ouvertures correspondantes dans la plaque de pression. Par ailleurs, les éléments mobiles peuvent alors être tous identiques et il est donc possible de réduire les coûts de fabrication associés.

Avantageusement, chaque élément mobile d'un dispositif de formage conforme à l'un quelconque des perfectionnements du premier aspect de l'invention comprend un pion mobile disposé à l'intérieur de l'une des ouvertures de la plaque de pression, les pions étant mobiles en translation selon un axe perpendiculaire à la surface supérieure de ladite plaque de pression.

Selon un mode de réalisation particulier, les pions peuvent prendre la forme de pions cylindriques à section circulaire. De telles pièces peuvent être fabriquées avec de faibles tolérances à un coût modéré relativement à des pièces plus complexes. Alternativement, les pions peuvent aussi prendre la forme de cylindre à section non circulaire, telles que par exemple une section carré ou polygonale.

Comme évoqué précédemment, les éléments mobiles peuvent être répartis selon une pluralité de configurations en fonction des objectifs recherchés. Éventuellement, les pions peuvent être répartis selon un réseau bidimensionnel régulier et périodique de lignes et de colonnes. Il est ainsi possible d'insérer une pelle en forme de peigne afin de prélever la pâte abaissée soutenue par lesdits pions lorsqu'ils sont dans la position surélevée. Cette répartition avantageuse permet astucieusement d'insérer la pelle entre les pions selon l'un quelconque des axes directeurs dudit réseau bidimensionnel. Selon les usages, et notamment dans le contexte d'un traitement automatisé du formage et/ou du prélèvement de la pâte ainsi mise en forme, la possibilité d'insérer la pelle selon plusieurs directions peut permettre d'améliorer les rendements.

Une telle pelle compatible avec un tel réseau bidimensionnel de pions régulièrement espacés en une pluralité de lignes et de colonne comprend une pluralité de doigts, idéalement en nombre égal au nombre de ligne ou de colonne dudit réseau, chaque doit étant formé d'une poutre parallélépipédique dont la largeur est inférieure au pas du réseau et la hauteur inférieure à la hauteur des pions dans leur position surélevée, afin que ladite pelle puisse être introduite entre les pions et sous la pâte abaissé, sans frottement.

Alternativement encore, les éléments mobiles peuvent prendre la forme de structures allongées telles qu'un réseau de poutres par exemple, s'étendant transversalement par rapport à la plaque de pression. Dans ce cas, la pelle utilisée pour retirer la pâte abaissée du dispositif de formage peut également se présenter sous forme d'un peigne. Néanmoins, l'insertion de la pelle sous la pâte abaissée n'est possible que selon une direction parallèle à la direction d'élongation des poutres.

De manière particulière, dans un dispositif de formage conforme à l'un quelconque des perfectionnements du premier aspect de l'invention, le plateau inférieur est agencé pour présenter un jeu fonctionnel entre le pion mobile de chaque élément mobile et l'ouverture correspondante de la plaque de pression. Ce jeu fonctionnel est déterminé, d'une part, afin de permettre aux éléments mobiles de se déplacer entre les positions rentrée et surélevée et, d'autre part, d'empêcher qu'une partie du pâton ne s'insère entre les éléments mobiles et la plaque de pression. Le jeu fonctionnel est par exemple compris entre 15 µm et 40 µm.

De manière plus générale, le plateau inférieur est agencé pour garantir l'existence d'un jeu fonctionnel minimal entre les pions et les ouvertures avec laquelle ils collaborent afin de permettre un coulissement sans contrainte malgré les dilatations thermiques des différents éléments (plaque de pression et éléments mobiles) et afin d'empêcher que la pâte ne s'y introduise durant l'opération de formage.

Préférentiellement, le dispositif de relevage d'un dispositif de formage conforme à l'un quelconque des perfectionnements du premier aspect de l'invention comprend seul ou en combinaison :
- une plaque support sur laquelle sont montés les éléments mobiles, et un actionneur agencé pour déplacer la plaque support de manière à ce que les éléments mobiles puissent prendre successivement la position rentrée et la position surélevée. Avantageusement, les éléments mobiles peuvent être montés avec un jeu de fonctionnement dans le plan de la plaque support afin de libérer les contraintes mécaniques, notamment dues aux dilatations thermiques, sur le positionnement desdits éléments mobiles sur la plaque support. A titre d'exemple, le jeu fonctionnel peut être de l'ordre du millimètre dans le plan de la plaque support, c'est-à-dire dans un plan transverse à la direction verticale. Alternativement, les éléments mobiles peuvent être fixés solidairement à la plaque support ;
- un premier moyen de chauffage agencé pour chauffer le plateau supérieur, afin de précuire la pâte abaissée, limiter son adhérence sur ledit plateau supérieur, et/ou limiter sa rétractation lorsque les plateaux supérieur et inférieur ne sont plus pressés l'un contre l'autre ;
- un deuxième moyen de chauffage agencé pour chauffer le plateau inférieur, afin de précuire la pâte abaissée, faciliter son décollement dudit plateau inférieur, et/ou limiter sa rétractation lorsque les plateaux supérieur et inférieur ne sont plus pressés l'un contre l'autre ;

Le dispositif de formage d'une pâte abaissée peut comporter un dispositif d'adaptation de la dimension de la pâte abaissée, ledit dispositif comportant :
- un moyen de stockage agencé pour stocker une pluralité de plateaux supérieurs, chaque plateau supérieur présentant sur une surface inférieure une empreinte de dimension prédéterminée,
- un mécanisme de chargement agencé pour déplacer l'un des plateaux supérieurs entre le moyen de stockage et une position d'accroche sur l'actionneur de formage.

De manière avantageuse, dans un dispositif de formage conforme à l'un quelconque des perfectionnements du premier aspect de l'invention, le plateau supérieur et/ou le plateau inférieur comprennent un matériau présentant une conductivité thermique supérieure ou égale à 50 W/m.K ou à 100 W/m.K. Il s'agit par exemple de l'aluminium, d'un alliage d'aluminium, ou de cuivre. Un tel matériau permet notamment que la température dudit plateau supérieur et/ou plateau inférieur soit la plus homogène possible et que le transfert de chaleur à la pâte soit le plus efficace possible.

Et préférentiellement, le plateau supérieur et/ou le plateau inférieur d'un dispositif de formage conforme à l'un quelconque des perfectionnements du premier aspect de l'invention, comprennent un revêtement antiadhésif au moins au niveau de leurs surfaces en regard, à savoir la surface inférieure du plateau supérieur, et la surface supérieure du plateau inférieur (plaque de pression et éléments mobiles).

Selon un second aspect de l'invention, il est proposé d'utiliser le dispositif de formage selon l'un quelconque des perfectionnements du premier aspect de l'invention pour le pressage d'un pâton de pâte du type pâte à pizza afin de former une pâte abaissée.

Selon un troisième aspect de l'invention, il est proposé un automate pour la conception d'au moins une pizza comprenant :
- un système de conservation et de dosage d'ingrédients, lesdits ingrédients étant aptes à être utilisés pour la confection de pizzas ;
- un dispositif de formage d'une pâte abaissée selon l'un quelconque des perfectionnements du premier aspect de l'invention,
- un four de cuisson, agencé pour cuire au moins une pizza ;
- un système de manutention agencé pour transférer au moins une des pizzas entre le système de conservation et de dosage, le dispositif de formage et le four de cuisson ;
- une unité de traitement programmée pour commander l'automate de manière à confectionner l'au moins une pizza selon une recette prédéterminée.

Des modes de réalisation variés de l'invention sont prévus, intégrant selon l'ensemble de leurs combinaisons possibles les différentes caractéristiques optionnelles exposées ici.

### Description des figures et des modes de réalisation

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1A illustre une vue en perspective du dispositif de formage selon l'invention,
- la FIGURE 1B illustre une vue en perspective d'une pelle agencée pour extraire une pâte abaissée par le dispositif de formage selon l'invention, ladite pelle collaborant avec ledit dispositif de formage,
- les FIGURES 2A et 2B illustrent deux exemples de réalisation différents du plateau inférieur, et plus particulièrement deux implantations particulières d'éléments mobiles,
- la FIGURE 2C illustre une vue de détail du montage des éléments mobiles à l'intérieur du plateau inférieur, de manière à visualiser les jeux fonctionnels permettant de vaincre les contraintes liées aux dilatations thermiques différentielles entre les composants dudit plateau inférieur,
- les FIGURES 3, 4, 5 et 6 illustrent respectivement les première, deuxième, troisième et quatrième étapes du procédé de formage d'une pâte abaissée à partir d'un pâton, à l'aide d'un dispositif selon la présente invention,
- la FIGURE 7 illustre l'intégration du dispositif de formage selon l'invention dans un automate pour la préparation de préparations culinaires.

Les modes de réalisation qui seront décrits dans la suite ne sont nullement limitatifs ; on pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

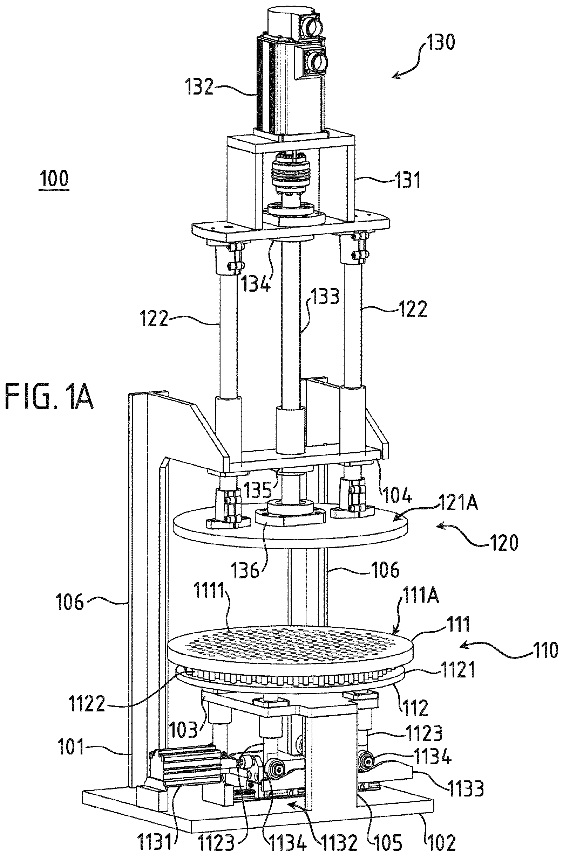

En référence à la FIGURE 1A le dispositif de formage 100 selon l'invention comprend un bâti 101, un plateau inférieur 110, un plateau supérieur 120, et un actionneur de formage 130. Le bâti 101 comprend une base 102, une première plateforme 103, et une deuxième plateforme 104. La plateforme 103 est fixée en position surélevée par rapport à la base 102 par des montants latéraux 105. Elle forme un support pour le plateau inférieur 110. La plateforme 104 est fixée en position surélevée par rapport à la première plateforme 103 par des bras 106 fixés sur la base 102. La plateforme 104 forme un support pour le plateau supérieur 120.

Le plateau inférieur 110 est agencé pour recevoir un pâton et former un support pour ce pâton pendant une opération de formage. Il comporte une plaque de pression 111, un plateau éjecteur 112 et un dispositif de relevage 113. La plaque de pression 111 présente une surface supérieure 111A apte à accueillir le pâton. Elle comprend une pluralité d'ouvertures traversantes 1111 s'étendant dans son épaisseur. La plaque de pression 111 est fixée solidairement à la première plateforme 103, par des moyens non représentés. Le plateau éjecteur 112 comporte une plaque support 1121 et une pluralité de pions 1122 s'étendant verticalement depuis une surface supérieure 112A de la plaque support 1121. Les pions 1122 prennent ici une forme cylindrique de révolution. Ils sont alignés les uns par rapport aux autres selon un réseau de lignes et de colonnes. Le plateau éjecteur 112 est montée en liaison glissière par rapport au bâti 101, au moyen de quatre arbres de guidage 1123 montés chacun en liaison pivot glissant sur la première plateforme 103. Une première extrémité des arbres de guidage 1123 est fixée à la plaque support 1121. Le dispositif de relevage 113 est agencé pour déplacer le plateau éjecteur 112 par rapport au bâti 101, et donc par rapport à la plaque de pression 111. Il comporte un vérin 1131 dont le corps est fixé à la base 102, et un mécanisme de transformation du mouvement 1132 agencé pour transformer un mouvement de translation horizontal en un mouvement de translation vertical. Le mécanisme de transformation du mouvement 1132 comprend deux pièces de guidage 1133 et quatre galets 1134. Les galets 1134 sont en liaison pivot avec les arbres de guidage 1123 du plateau éjecteur 112 selon des premiers axes horizontaux, parallèles les uns aux autres. Les pièces de guidage 1133 sont en liaison glissière avec la base 102 selon un deuxième axe horizontal, perpendiculaire aux premiers axes horizontaux. Elles comprennent chacune une surface de roulement sur laquelle l'un des galets 1134 peut venir rouler. Les surfaces de roulement s'étendent selon des troisièmes axes horizontaux, parallèles au deuxième axe horizontal, en présentant un profil variable selon la direction vertical, de sorte que le roulement des galets entraîne par endroits un déplacement vertical de ces galets, et donc du plateau éjecteur 112 avec ses pions 1122. Une extrémité libre du piston du vérin 1131 est fixée aux pièces de guidage 1133. Le vérin 1131 est agencé pour déplacer les pièces de guidage 1133 selon le deuxième axe horizontal. Le plateau inférieur 110 permet ainsi aux pions 1122 de prendre successivement une position rentrée, dans laquelle leur surface supérieure affleure la surface supérieure 111A de la plaque de pression 111, et une position surélevée, dans laquelle ils sont en saillie par rapport à la plaque de pression 111.

Le plateau supérieur 120 est agencé pour pouvoir se déplacer en translation verticalement, de manière à venir écraser un pâton situé sur le plateau inférieur 110. Il comporte une plaque 121, et deux arbres de guidage linéaire 122 s'étendant verticalement depuis une surface supérieure 121A de la plaque 121. Les arbres de guidage linéaire 122 sont chacun en liaison glissière avec la deuxième plateforme 104 selon un axe vertical. Il en résulte que le plateau supérieur 120 est en liaison glissière selon un axe vertical.

L'actionneur de formage 130 est agencé pour entraîner le déplacement du plateau supérieur 120 par rapport au bâti 101 entre une position dite étendue, dans laquelle le plateau supérieure 120 est suffisamment rapproché du plateau inférieur 110 pour permettre le pressage d'un pâton, et une position dite contractée, dans laquelle le plateau supérieur 120 est suffisamment éloigné du plateau inférieur 110 pour permettre l'insertion d'un pâton, et le retrait d'une pâte abaissée. L'actionneur de formage 130 comporte un cadre de fixation 131, un moteur 132, et une vis d'entraînement 133. Le cadre de fixation 131 est fixé aux pistons 122. Le moteur 132 comporte un arbre apte à tourner selon un axe de rotation vertical. La vis d'entraînement 133 est solidaire en rotation de l'arbre du moteur 132. Elle pourrait également être liée à l'arbre par un réducteur. La vis d'entraînement 133 est en liaison pivot avec le cadre de fixation 131 au moyen d'un roulement à billes 134, en liaison hélicoïdale avec la deuxième plateforme 104 au moyen d'un écrou 135 solidaire de la deuxième plateforme 104, et en liaison pivot avec le plateau supérieur 120 au moyen d'un roulement à billes 136. Ces trois liaisons ont pour axe l'axe de rotation vertical du moteur 132.

Dans un mode de réalisation alternatif, l'actionneur de formage pourrait comporter un ou plusieurs vérins solidaires de la deuxième plateforme 104, un piston de chaque vérin étant fixé au plateau supérieur 120.

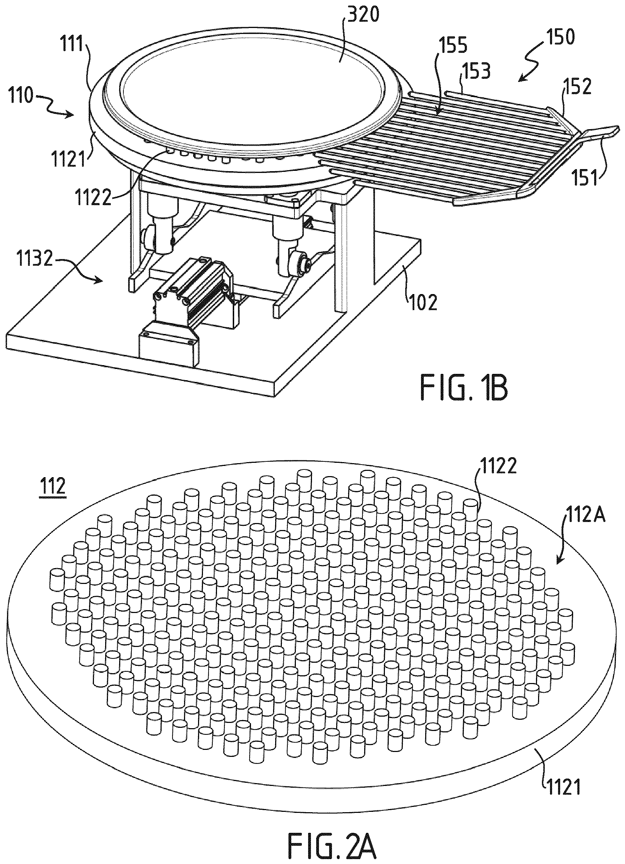

La FIGURE 1B illustre une vue en perspective d'une pelle 150 agencée pour extraire une pâte abaissée 320 par le dispositif de formage 100 selon l'invention, ladite pelle 150 collaborant avec ledit dispositif de formage 100.

Plus particulièrement, la pelle 150 comprend une première extrémité 151 rectiligne formant un manche au bout duquel s'étend un cadre convexe 152. La pelle 150 comprend en outre une surface dite de prélèvement 155 formée par un peigne bidimensionnel s'étendant depuis le cadre convexe 152. Le peigne comprend une pluralité de dents 153, par exemple en forme de poutres rectilignes, s'étendant selon des directions parallèles. La distance entre deux dents adjacentes est constante et préférentiellement identique à la distance séparant deux éléments mobiles adjacents sur la plaque support 1121 du plateau inférieur 110. En outre, la largeur de chaque dent 153 est inférieure à l'espace laissé libre entre deux éléments mobiles adjacents, de manière à permettre au peigne de s'insérer latéralement entre les éléments mobiles du plateau inférieur.

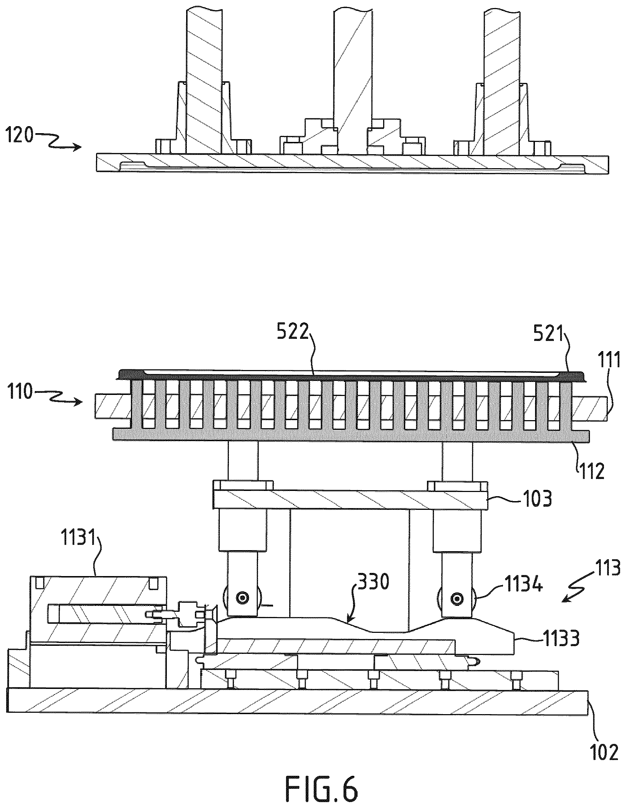

L'épaisseur de toutes les dents 153 est préférentiellement constante. L'épaisseur des dents 153 est préférentiellement légèrement inférieure à la hauteur des éléments mobiles 1122 par rapport à la plaque de pression 111 lorsqu'ils sont dans leur position surélevée telle que décrite dans la FIGURE 6, de sorte que l'insertion de la pelle 150 est possible entre la plaque de pression 111 et la pâte abaissée 320, chaque dent 153 de la pelle 150 s'insérant entre deux rangées consécutives d'éléments mobiles 1122.

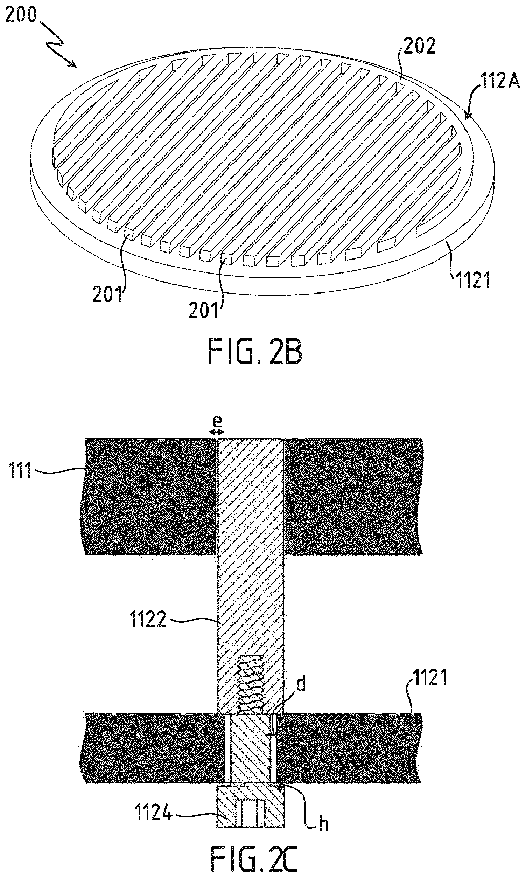

Les FIGURES 2A et 2B décrivent deux exemples de réalisation différents du plateau inférieur 110, et plus particulièrement deux implantations particulières d'éléments mobiles à la surface de la plaque support 1121.

Dans le premier exemple de réalisation (FIGURE 2A), les éléments mobiles mis en oeuvre forment une surface non connexe. Les éléments mobiles sont constitués par un réseau de pions cylindriques 1122 de section circulaire et tous identiques. Ils sont organisés selon une implantation régulière et périodique dans les deux directions du plan formé par la surface supérieure 112A de la plaque support 1121. Pour un tel mode de réalisation, la plaque de pression 111 (non représentée) présente un réseau d'ouvertures selon une implantation identique au réseau d'éléments mobiles présenté sur la FIGURE 2A. Les pions présentent typiquement un diamètre de l'ordre de 10mm. Par ailleurs, le dimensionnement de la plaque de pression et le positionnement des éléments mobiles par rapport à ladite plaque de pression sont agencé pour garantir l'existence d'un jeu fonctionnel minimal entre les pions et les ouvertures avec laquelle ils collaborent afin de permettre un coulissement sans contrainte malgré les dilatations thermiques des différents éléments (plaque de pression et éléments mobiles) et afin d'empêcher que la pâte ne s'y introduise durant l'opération de pressage.

Typiquement, le positionnement des différents éléments mobiles par rapport à la plaque de pression est assuré avec une tolérance de l'ordre du centième de millimètre, et le jeu fonctionnel entre chaque élément mobile et l'ouverture de la plaque de pression avec laquelle il collabore est de l'ordre de 30 µm.

Dans le deuxième exemple de réalisation (FIGURE 2B), les éléments mobiles mis en oeuvre forment une surface connexe. Les éléments mobiles prennent la forme d'un peigne bidimensionnel en saillie par rapport à la surface supérieure 112A de la plaque support 1121. Le peigne 200 comprend une pluralité de dents 201 en forme de poutres rectilignes s'étendant selon des directions horizontales et parallèles, et une portion de pourtour périphérique 202 reliant les dents 201. La connexité de la surface supérieure des éléments mobiles est assurée par le pourtour périphérique 202.

De manière comparable à l'exemple de réalisation précédemment décrit dans la FIGURE 2A, la plaque de pression 111 (non représentée) présente une ouverture dont la géométrie est complémentaire à la forme des dents 202, de sorte que ces dernières puissent coulisser librement à l'intérieur de cette ouverture. Par ailleurs, le dimensionnement de la plaque de pression et le positionnement des éléments mobiles par rapport à ladite plaque de pression sont agencé pour garantir l'existence d'un jeu fonctionnel minimal entre les pions et les ouvertures avec laquelle ils collaborent, malgré les dilatations thermiques des différents éléments (plaque de pression et éléments mobiles) et afin d'empêcher que la pâte ne s'y introduise durant l'opération de pressage.

La FIGURE 2C illustre une vue de détail du montage d'un élément mobile à l'intérieur du plateau inférieur, de manière à visualiser les jeux fonctionnels permettant de vaincre les contraintes liées aux dilatations thermiques différentielles entre les composants dudit plateau inférieur.

Sur l'exemple illustré à la FIGURE 2C, l'élément mobile 1122 est monté sur la plaque support 1121 du plateau inférieur avec un jeu fonctionnel vertical h très faible, de l'ordre de quelques dizaines de micromètres. Ce jeu permet de corriger un éventuel défaut d'alignement de l'axe de l'élément mobile 1122 avec l'axe de l'ouverture 1111 ménagée dans la plaque de pression 111. Le jeu latéral fonctionnel d est plus important, de l'ordre du millimètre, de manière à ce que les dilatations thermiques différentielles entre chaque élément mobile 1122, la plaque support 1121 et la plaque de pression 111 n'empêchent pas chaque élément mobile de coulisser à l'intérieur de l'ouverture traversante 1111 prévue à cet effet sur la plaque de pression 111 comme détaillé précédemment. En d'autres termes, les jeux fonctionnels verticaux et transverses au niveau de la plaque support 1121 sont tels qu'ils permettent à chaque élément mobile 1122 de s'aligner automatiquement avec le trou débouchant correspondant sur la plaque de pression 111, malgré d'éventuelles dilatations thermiques différentielles entre ces éléments.

Au niveau de la plaque de pression 111, un jeu minimal est prévu de manière à permettre le coulissement de l'élément mobile tout en empêchant l'insertion de pâte fraîche à l'intérieur dudit trou débouchant.

Sur l'exemple illustré à la FIGUE 2C, l'élément mobile 1122 est monté sur la plaque support 1121 par l'intermédiaire d'une vis 1124.

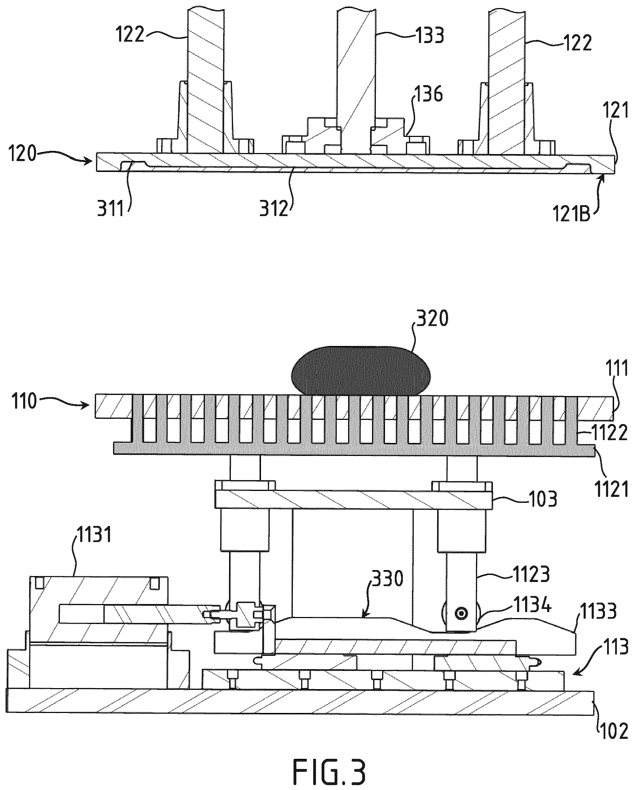

En référence aux FIGURES 3, 4, 5 et 6 qui illustrent le dispositif de formage au travers de vues en coupe de profil dans différentes configurations, le procédé de formage à l'aide du dispositif de formage selon l'invention va maintenant être décrit.

Au cours de la première étape du procédé schématisée sur la FIGURE 3, le plateau inférieur 110 est suffisamment distant du plateau supérieur 120 pour permettre l'insertion d'un pâton 320. Celui-ci est préférentiellement placé au centre de la plaque de pression 111. Les éléments mobiles supportés ici par la plaque support 1121 sont placés dans la configuration rentrée afin de former une surface plane avec la plaque de pression 111. Pour ce faire, le vérin 1131 est actionné pour positionner les galets 1134 dans un creux des surfaces de roulement 330.

On peut voir aussi sur cette FIGURE que le plateau supérieur 120 comprend une empreinte en creux formée sur sa surface inférieure 121B, permettant d'obtenir une pâte abaissée avec une forme souhaitée lors de l'opération de formage. Plus particulièrement, le plateau supérieur 120 comprend une empreinte 311 formée sur le pourtour périphérique de la surface 121B, afin de réaliser une croûte sur le pourtour de la pâte abaissée. A titre d'exemple non limitatif, la profondeur de l'empreinte périphérique 311 est comprise entre 4 et 8mm. Une empreinte centrale 312 moins profonde est réalisée sur toute la surface située à l'intérieur de l'empreinte périphérique 311. Préférentiellement, la profondeur de l'empreinte centrale 312 est constante. Alternativement, la profondeur de l'empreinte centrale 312 peut être variable et irrégulière afin de simuler un abaissement artisanal d'un pâton. A titre d'exemple non limitatif, la profondeur de l'empreinte centrale 312 est comprise entre 1,5mm et 3mm.

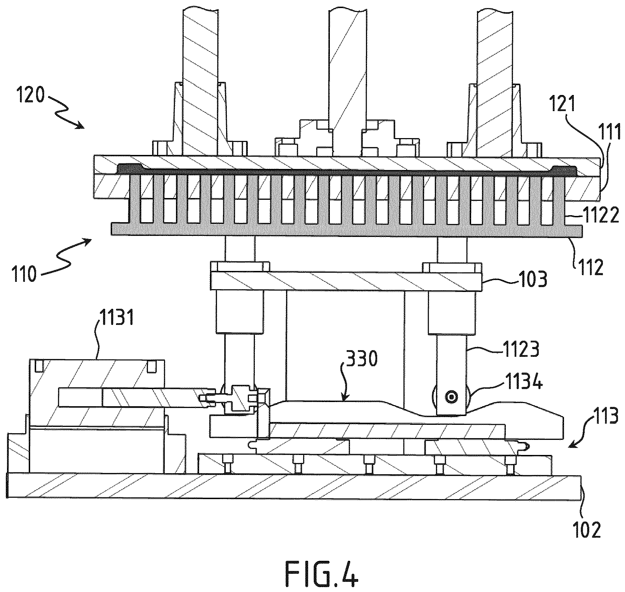

La seconde étape du procédé de formage est illustrée sur la FIGURE 4. La configuration du dispositif de formage 100 est inchangée par rapport à la configuration décrite à l'étape précédente, sauf en ce que le plateau supérieur 120 est abaissé de manière à ce que le pâton 320 soit pressé entre, d'une part la surface formée par la plaque de pression 111 et les éléments mobiles 1122 et, d'autre part, le plateau supérieur 120. De cette manière, le pâton est étalé à l'intérieur du volume fermé compris entre ces éléments et prend donc la forme correspondante, occupant à la fois tout le volume de l'empreinte centrale 312 et le volume de l'empreinte périphérique 311.

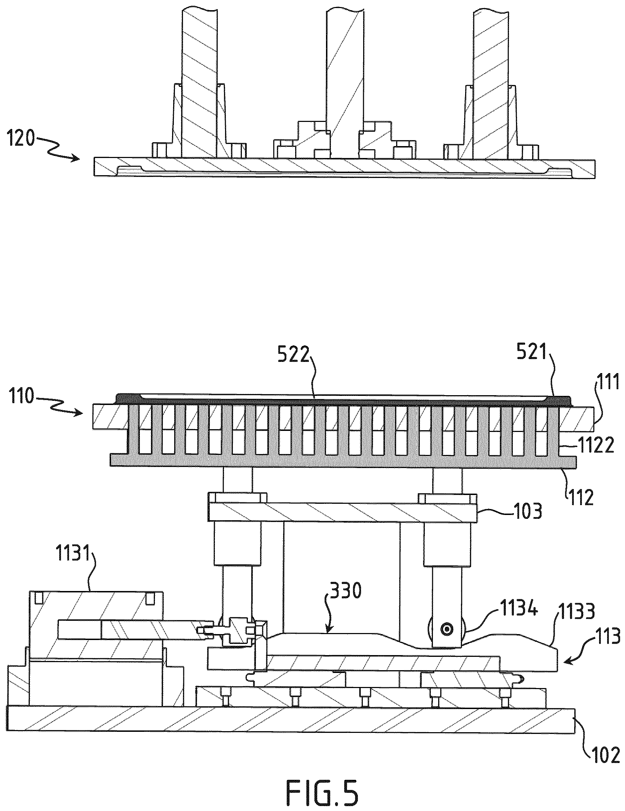

La troisième étape du procédé de formage est illustrée sur la FIGURE 5. La configuration du dispositif de formage 100 est inchangée par rapport à la configuration décrite à l'étape précédente, sauf en ce que le plateau supérieur 120 est maintenant relevé de manière à libérer la pâte abaissée sur sa partie supérieure. La pâte abaissée a pris la forme du moule durant l'étape précédente et comprend donc une partie centrale 522 dont l'épaisseur est inférieure à celle du pourtour périphérique 521.

La quatrième étape du procédé de formage est illustrée sur la FIGURE 6.

L'objectif de cette quatrième étape est de soulever la pâte abaissée par rapport à la plaque de pression 111 de manière à pouvoir introduire ultérieurement une pelle entre ladite plaque de pression et la pâte abaissée sans toucher cette dernière. Pour ce faire, les éléments mobiles 1122 doivent donc être déplacés jusque dans leur position surélevée. Le vérin 1131 est actionné pour positionner les galets 1134 sur une partie haute des surfaces de roulement 330.

Éventuellement, les pièces de guidage 1133 peuvent être agencées de manière à définir plusieurs configurations intermédiaires du plateau éjecteur 112. Elles comprennent par exemple une pluralité de plans horizontaux situés à des hauteurs différentes et permettant de définir des positions stables traduisant des hauteurs particulières des éléments mobiles au-dessus de la plaque de pression 111.

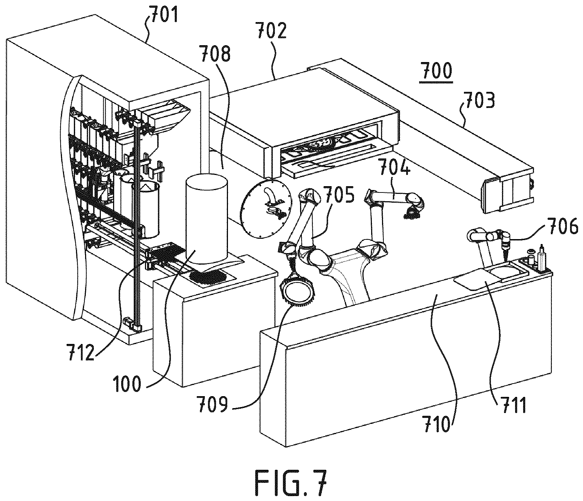

La FIGURE 7 décrit l'utilisation d'un dispositif de formage selon l'un quelconque des perfectionnements évoqués précédemment dans un système de confection automatique de préparations culinaires.

Le système de confection automatique 700 peut notamment être agencé pour réaliser la confection, la cuisson, et/ou l'emballage et/ou la livraison de préparations culinaires. Il s'applique en particulier à la confection de préparations culinaires comprenant une pâte abaissée, et particulièrement les pizzas.

Le système de confection automatique, également appelé automate 700, comprend :
- un système 701 de conservation et de dosage d'ingrédients, lesdits ingrédients étant aptes à être utilisés pour la confection desdites préparations culinaires ;
- un dispositif de formage 100 conforme à l'un quelconque des perfectionnements de la présente invention ;
- un four de cuisson 702, agencé pour pouvoir cuire les préparations culinaires ;
- un distributeur de cartons 703 ;
- un système de manutention 704-706, agencé pour pouvoir transférer au moins une des préparations culinaires dressées entre notamment le système 701 de conservation et de dosage des ingrédients, et le four de cuisson 702 ;
- une unité de traitement programmée pour commander ledit automate de manière à confectionner une préparation culinaire selon une recette prédéterminée.

Pour faciliter la compréhension, un exemple va être donné pour la préparation d'une pizza, l'automate étant cependant agencé pour confectionner une large variété de préparations culinaires, comme évoqué précédemment.

Dans l'exemple illustré sur la FIGURE 7, l'automate 700 comprend par ailleurs un réservoir à pâte fraîche 708. Le système de manutention mis en oeuvre comprend notamment trois bras robotisés multiaxes 704, 705, 706. Ces bras robotisés sont agencés pour manipuler la pizza en cours de confection, par exemple par l'intermédiaire d'une pelle 709, et pour la transférer d'un poste à un autre.

Ainsi, au cours d'une première étape, une quantité prédéterminée de pâte - de préférence fraîche - est extraite du réservoir 708 pour former un pâton. Cette quantité prédéterminée est dimensionnée de manière à pouvoir aplatir le pâton aux dimensions souhaitées d'une pâte à pizza.

Le bras robotisé 705 peut être muni d'une pelle, appelée pelle à pâton, pour transférer le pâton vers le dispositif de formage 100. Plus précisément, le bras robotisé 705 dépose le pâton sur le plateau inférieur 110. Le dispositif de formage 100 presse le pâton pour former une pâte abaissée par abaissement du plateau supérieur 120. Le dispositif de relevage 113 place ensuite les éléments mobiles 1122 dans la position surélevée.

L'automate 700 peut comporter, en outre, des moyens pour déposer une sauce (par exemple à base de tomates ou de crème fraîche) sur la pâte abaissée.

Un convoyeur 712 peut être ensuite muni d'une pelle, par exemple une pelle en forme de peigne, pour transférer la pâte à pizza abaissée vers le système 701 de conservation et de dosage. Ledit système 701 est agencé pour déposer sur la surface de la pâte des ingrédients en quantités déterminées selon une recette donnée.

Le bras robotisé 705 peut ensuite transférer la pizza du système 701 vers le four de cuisson 702.

Le four de cuisson 702 peut être agencé pour cuire une pizza selon un cycle de cuisson dépendant de paramètres de cuisson déterminés selon la recette sélectionnée. Les paramètres de cuisson comprennent par exemple une durée et une température de cuisson.

Le bras robotisé 706 peut être agencé pour extraire individuellement des cartons 711 du distributeur de cartons 703, et les déposer sur un poste de conditionnement 710.

En fin de cycle de cuisson, la porte du four de cuisson 702 est ouverte, et le bras robotisé 704, retire la pizza du four de cuisson 702 à l'aide d'une pelle. Le bras robotisé 704 dépose alors la pizza dans un carton 711 déposé sur un poste de conditionnement 710.

Le bras robotisé 706 peut également être agencé pour découper la pizza déposée dans le carton 711, et/ou pour l'assaisonner avec des condiments.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Dispositif de formage d'une pâte abaissée à partir d'un pâton, comprenant :
- un plateau inférieur (110), agencé pour supporter le pâton (320) pendant une opération de formage,
- un plateau supérieur (120), et
- un actionneur de formage (130), agencé pour générer un déplacement relatif entre le plateau supérieur et le plateau inférieur, de manière à pouvoir presser le pâton entre le plateau inférieur et le plateau supérieur pour former une pâte abaissée,
**caractérisé en ce que** le plateau inférieur (110) comporte :
- une plaque de pression (111) présentant une surface supérieure (111A) apte à accueillir le pâton, la plaque de pression étant munie d'une pluralité d'ouvertures (1111) formées sur sa surface supérieure,
- une pluralité d'éléments mobiles (1122, 201), chaque élément mobile coopérant avec l'une des ouvertures de la plaque de pression, les éléments mobiles étant aptes à prendre :
∘ une position dite rentrée, dans laquelle une surface supérieure de chaque élément mobile affleure la surface supérieure (111A) de la plaque de pression (111), de manière à former globalement une surface continue avec la plaque de pression, et
∘ une position dite surélevée, dans laquelle les éléments mobiles sont en saillie par rapport à la surface supérieure (111A) de la plaque de pression (111), de manière à ce que les surfaces supérieures de chaque élément mobile forment ensemble une surface surélevée par rapport à la surface supérieure de la plaque de pression, et
- un dispositif de relevage (113), agencé pour déplacer les éléments mobiles relativement à la plaque de pression, de manière à ce que les éléments mobiles prennent la position rentrée ou la position surélevée.

2. Dispositif selon la revendication 1, **caractérisé en ce que** la somme des surfaces supérieures des éléments mobiles est comprise entre 4% et 96% de la surface globale de la plaque de pression.

3. Dispositif selon l'une quelconque des revendications 1 ou 2, **caractérisé en ce que** les surfaces supérieures des éléments mobiles forment ensemble une surface connexe.

4. Dispositif selon l'une quelconque des revendications 1 ou 2, **caractérisé en ce que** les surfaces supérieures des éléments mobiles (1122, 201) forment ensemble une surface non connexe, chaque élément mobile étant régulièrement espacé du plus proche élément mobile voisin dans au moins une direction.

5. Dispositif selon l'une quelconque des revendications 1 à 4, **caractérisé en ce que** chaque élément mobile comprend un pion (1122) disposé à l'intérieur de l'une des ouvertures (1111) de la plaque de pression (111), les pions étant mobiles en translation selon un axe perpendiculaire à la surface supérieure de ladite plaque de pression.

6. Dispositif selon la revendication précédente, caractérisé en ce le plateau inférieur (110) est agencé pour présenter un jeu fonctionnel entre le pion (1122) de chaque élément mobile et l'ouverture (1111) correspondante de la plaque de pression (111).

7. Dispositif selon l'une quelconque des revendications 2 à 6, **caractérisé en ce que** le dispositif de relevage (113) comprend une plaque support (1121) sur laquelle sont montés les éléments mobiles (1122, 201), et un actionneur (1131, 1132) agencé pour déplacer la plaque support (1121) de manière à ce que les éléments mobiles puissent prendre successivement la position rentrée et la position surélevée.

8. Dispositif selon l'une quelconque des revendications 1 à 7, **caractérisé en ce qu'**il comprend un premier moyen de chauffage agencé pour chauffer le plateau supérieur (120).

9. Dispositif selon l'une quelconque des revendications précédentes, **caractérisé en ce qu'**il comprend un deuxième moyen de chauffage agencé pour chauffer le plateau inférieur (110).

10. Dispositif selon l'une quelconque des revendications 1 à 9, **caractérisé en ce que** le plateau supérieur et/ou le plateau inférieur comprennent un matériau présentant une conductivité thermique supérieure ou égale à 50 W/m.K, tel que par exemple l'aluminium, un alliage d'aluminium ou le cuivre.

11. Dispositif selon l'une quelconque des revendications 1 à 10, **caractérisé en ce que** le plateau supérieur et/ou le plateau inférieur comprennent un revêtement antiadhésif au moins au niveau de leurs surfaces en regard.

12. Dispositif selon l'une quelconque des revendications 1 à 11, **caractérisé en ce qu'**il comprend un dispositif d'adaptation de la dimension de la pâte abaissée, ledit dispositif comportant :
- un moyen de stockage agencé pour stocker une pluralité de plateaux supérieurs, chaque plateau supérieur présentant sur une surface inférieure une empreinte de dimension prédéterminée,
- un mécanisme de chargement agencé pour déplacer l'un des plateaux supérieurs entre le moyen de stockage et une position d'accroche sur l'actionneur de formage.

13. Utilisation du dispositif selon l'une quelconque des revendications précédentes pour le pressage d'un pâton de pâte du type pâte à pizza afin de former une pâte abaissée.

14. Automate pour la conception d'au moins une pizza comprenant :
- un système (701) de conservation et de dosage d'ingrédients, lesdits ingrédients étant aptes à être utilisés pour la confection de pizzas ;
- un dispositif (100) de formage d'une pâte abaissée selon l'une quelconque des revendications 1 à 12,
- un four de cuisson (702), agencé pour cuire au moins une pizza ;
- un système de manutention (704, 705, 706) agencé pour transférer au moins une des pizzas entre le système (701) de conservation et de dosage, le dispositif (100) de formage et le four de cuisson (702) ;
- une unité de traitement programmée pour commander l'automate de manière à confectionner l'au moins une pizza selon une recette prédéterminée.

## Patentansprüche

1. Vorrichtung zum Formen eines flächigen Teigs ausgehend von einem Teigling, enthaltend:
- eine obere Platte (110), die dazu vorgesehen ist, den Teigling (320) während eines Formvorgangs abzustützen,
- eine untere Platte (120), und
- ein Betätigungsglied (130) zum Formen, das dazu vorgesehen ist, eine relative Verlagerung zwischen der oberen Platte und der unteren Platte zu erzeugen, so dass der Teigling zwischen der unteren Platte und der oberen Platte gepresst werden kann, um einen flächigen Teig zu formen,
**dadurch gekennzeichnet, dass** die untere Platte (110) enthält:
- eine Druckplatte (111), die eine obere Fläche (111A) aufweist, die dazu geeignet ist, den Teigling aufzunehmen, wobei die Druckplatte mit einer Mehrzahl von Öffnungen (1111) versehen ist, die an ihrer oberen Fläche ausgebildet sind,
- eine Mehrzahl von beweglichen Elementen (1122, 201), wobei jedes bewegliche Element mit einer der Öffnungen der Druckplatte zusammenwirkt, wobei die beweglichen Elemente dazu geeignet sind,
∘ eine sogenannte eingefahrene Stellung einzunehmen, in welcher eine obere Fläche eines jeden beweglichen Elements bündig mit der oberen Fläche (11A) der Druckplatte (111) ist, so dass insgesamt eine durchgehende Fläche mit der Druckplatte gebildet wird, und
∘ eine sogenannte angehobene Stellung einzunehmen, in welcher die beweglichen Elemente bezüglich der oberen Fläche (111A) der Druckplate (111) vorspringen, so dass die oberen Flächen eines jeden beweglichen Elements zusammen eine bezüglich der oberen Fläche der Druckplatte angehobene Fläche bilden, und
- eine Hebeeinrichtung (113), die dazu vorgesehen ist, die beweglichen Elemente relativ zur Druckplatte zu verlagern, so dass die beweglichen Elemente die eingefahrene Stellung oder die angehobene Stellung einnehmen.

2. Vorrichtung nach Anspruch 1, **dadurch gekennzeichnet, dass** die Summe der oberen Flächen der beweglichen Elemente zwischen 4 % und 96 % der Gesamtfläche der Druckplatte beträgt.

3. Vorrichtung nach einem der Ansprüche 1 oder 2, **dadurch gekennzeichnet, dass** die oberen Flächen der beweglichen Elemente zusammen eine zusammenhängende Fläche bilden.

4. Vorrichtung nach einem der Ansprüche 1 oder 2, **dadurch gekennzeichnet, dass** die oberen Flächen der beweglichen Elemente (1122, 201) zusammen eine nicht zusammenhängende Fläche bilden, wobei jedes bewegliche Element gleichmäßig vom benachbarten nächstliegenden beweglichen Element in zumindest einer Richtung beabstandet ist.

5. Vorrichtung nach einem der Ansprüche 1 bis 4, **dadurch gekennzeichnet, dass** jedes bewegliche Element einen Zapfen (1122) enthält, der innerhalb einer der Öffnungen (1111) der Druckplatte (111) angeordnet ist, wobei die Zapfen entlang einer senkrecht zur oberen Fläche der Druckplatte verlaufenden Achse verschiebbar sind.

6. Vorrichtung nach dem vorangehenden Anspruch, **dadurch gekennzeichnet, dass** die untere Platte (110) dazu vorgesehen ist, ein funktionelles Spiel zwischen dem Zapfen (1122) eines jeden beweglichen Elements und der entsprechenden Öffnung (1111) der Druckplatte (111) aufzuweisen.

7. Vorrichtung nach einem der Ansprüche 2 bis 6, **dadurch gekennzeichnet, dass** die Hebeeinrichtung (113) eine Tragplatte (1121) enthält, an welcher die beweglichen Elemente (1122, 201) gelagert sind, sowie ein Betätigungsglied (1131, 1132), das dazu vorgesehen ist, die Tragplatte (1121) so zu verlagern, dass die beweglichen Elemente nacheinander die eingefahrene Stellung und die angehobene Stellung einnehmen können.

8. Vorrichtung nach einem der Ansprüche 1 bis 7, **dadurch gekennzeichnet, dass** sie eine erste Heizeinrichtung enthält, die dazu vorgesehen ist, die obere Platte (120) zu heizen.

9. Vorrichtung nach einem der vorangehenden Ansprüche, **dadurch gekennzeichnet, dass** sie eine zweite Heizeinrichtung enthält, die dazu vorgesehen ist, die untere Platte (110) zu heizen.

10. Vorrichtung nach einem der Ansprüche 1 bis 9, **dadurch gekennzeichnet, dass** die obere Platte und/oder die untere Platte ein Material enthalten, das eine Wärmeleitfähigkeit höher oder gleich 50 W/m·K aufweist, wie beispielsweise Aluminium, eine Aluminiumlegierung oder Kupfer.

11. Vorrichtung nach einem der Ansprüche 1 bis 10, **dadurch gekennzeichnet, dass** die obere Platte und/oder die untere Platte eine Antihaftbeschichtung zumindest im Bereich ihrer gegenüberliegenden Flächen enthalten.

12. Vorrichtung nach einem der Ansprüche 1 bis 11, **dadurch gekennzeichnet, dass** sie eine Einrichtung zum Anpassen der Abmessung des flächigen Teigs enthält, wobei die Einrichtung enthält:
- eine Speichereinrichtung, die dazu vorgesehen ist, eine Mehrzahl von oberen Platten zu speichern, wobei jede obere Platte an einer unteren Fläche eine Prägung mit vorbestimmter Abmessung aufweist,
- einen Lademechanismus, der dazu vorgesehen ist, eine der oberen Platten zwischen der Speichereinrichtung und einer Stellung zum Verhaken mit dem Formungsbetätigungsglied zu verlagern.

13. Verwendung der Vorrichtung nach einem der vorangehenden Ansprüche zum Pressen eines Teiglings aus Teig vom Typ Pizzateig zum Formen eines flächigen Teigs.

14. Automat zum Herstellen zumindest einer Pizza, enthaltend:
- ein System (701) zum Aufbewahren und Dosieren von Zutaten, wobei die Zutaten dazu geeignet sind, für die Zubereitung von Pizzen verwendet zu werden;
- eine Vorrichtung (100) zum Formen eines flächigen Teigs nach einem der Ansprüche 1 bis 12,
- einen Backofen (702), der dazu vorgesehen ist, zumindest eine Pizza zu backen;
- ein Handhabungssystem (704, 705, 706), das dazu vorgesehen ist, zumindest eine der Pizzen zwischen dem Aufbewahrungs- und Dosierungssystem (701), der Formvorrichtung (100) und dem Backofen (702) zu überführen;
- eine programmierbare Verarbeitungseinheit zum Steuern des Automaten derart, dass die zumindest eine Pizza nach einem vorbestimmten Rezept zubereitet wird.

## Claims

1. Device for forming a sheeted dough from a dough piece, comprising:
- a lower platen (110), arranged to support the dough piece (320) during a forming operation,
- an upper platen (120), and
- a forming actuator (130), arranged to generate a relative movement between the upper platen and the lower platen, so that the dough piece can be pressed between the lower platen and the upper platen to form a sheeted dough,
**characterized in that** the lower platen (110) comprises:
- a pressure plate (111) having an upper surface (111A) suitable for receiving the dough piece, the pressure plate being equipped with a plurality of apertures (111) formed in the upper surface thereof,
- a plurality of moveable elements (1122, 201), each moveable element engaging with one of the apertures in the pressure plate, the moveable elements being suitable for adopting:
∘ a position known as retracted position, in which an upper surface of each moveable element is flush with the upper surface (111A) of the pressure plate (111), in such a way as to form, overall, a continuous surface with the pressure plate, and
∘ a so-called raised position, in which the moveable elements protrude with respect to the upper surface (111A) of the pressure plate (111), in such a way that the upper surfaces of each moveable element together form a raised surface with respect to the upper surface of the pressure plate, and
- a lifting device (113), arranged to move the moveable elements with respect to the pressure plate, in such a way that the moveable elements adopt the retracted position or the raised position.

2. Device according to claim 1, **characterized in that** the sum of the upper surface areas of the moveable elements is comprised between 4% and 96% of the total surface area of the pressure plate.

3. Device according to any one of claims 1 or 2, **characterized in that** the upper surfaces of the moveable elements together form a connected surface.

4. Device according to any one of claims 1 or 2, **characterized in that** the upper surfaces of the moveable elements (1122, 201) together form a disconnected surface, each moveable element being evenly spaced from the nearest neighbouring moveable element in at least one direction.

5. Device according to any one of claims 1 to 4, **characterized in that** each moveable element comprises a stud (1122) arranged inside one of the apertures (1111) of the pressure plate (111), the studs being capable of being moved in translation along an axis perpendicular to the upper surface of said pressure plate.

6. Device according to the previous claim, **characterized in that** the lower platen (110) is arranged so that there is clearance between the stud (1122) of each moveable element and the corresponding aperture (1111) of the pressure plate (111).

7. Device according to any one of claims 2 to 6, **characterized in that** the lifting device (113) comprises a support plate (1121) on which the moveable elements (1122, 201) are mounted, and an actuator (1131, 1132) arranged to move the support
plate (1121) so that the moveable elements can successively adopt the retracted position and the raised position.

8. Device according to any one of claims 1 to 7, **characterized in that** it comprises a first heating means arranged to heat the upper platen (120).

9. Device according to any one of the previous claims, **characterized in that** it comprises a second heating means arranged to heat the lower platen (110).

10. Device according to any one of claims 1 to 9, **characterized in that** the upper platen and/or the lower platen comprise a material having a thermal conductivity greater than or equal to 50 W/m.K, such as for example aluminium, an aluminium alloy or copper.

11. Device according to any one of claims 1 to 10, **characterized in that** the upper platen and/or the lower platen comprise a non-stick coating at least on the facing surfaces thereof.

12. Device according to any one of claims 1 to 11, **characterized in that** it comprises a device for adjusting the size of the sheeted dough, said device comprising:
- storage means arranged to store a plurality of upper platens, each upper platen having on a lower surface thereof a recess of a predetermined size,
- a loading mechanism arranged to move one of the upper platens between the storage means and a position in which is it attached to the forming actuator.

13. Use of the device according to any one of the previous claims to press a dough piece of the pizza dough type in order to form a sheeted dough.

14. Automated machine for preparing at least one pizza comprising:
- a system (701) for preserving and metering ingredients, said ingredients being suitable for use in preparing pizzas;
- a device (100) for forming a sheeted dough according to any one of claims 1 to 12;
- an oven (702), arranged to cook at least one pizza;
- a handling system (704, 705, 706) arranged to transfer at least one of the pizzas between the preservation and metering system (701), the forming device (100) and the cooking oven (702);
- a processing unit programmed to control the automated machine so as to make the at least one pizza according to a predetermined recipe.
